# EUROPÄISCHE PATENTSCHRIFT

(11) **EP 1 149 619 B1**
(45) Veröffentlichungstag und Bekanntmachung des Hinweises auf die Patenterteilung: **22.01.2003**
(21) Anmeldenummer: 00108593.5
(22) Anmeldetag: 20.04.2000
(51) Int. Cl.: B01D 33/21

(54) **Filtereinrichtung zum Klären von verschmutzten Flüssigkeiten**
Filter device for clarifying contaminated liquids
Dispositif de filtration pour la clarification de liquides contaminés

(43) Veröffentlichungstag der Anmeldung: 31.10.2001
(73) Patentinhaber: Martin Systems AG, 96515 Sonneberg (DE)
(72) Erfinder: Harms, Eberhard, 96524 Mupperg (DE); Grigo, Mark, 96515 Sonneberg (DE)
(74) Vertreter: Luthardt, Günter, Dipl.-Ing.

(56) Entgegenhaltungen:
- EP-A- 0 289 674
- DE-A- 19 537 578
- US-A- 5 707 517
- US-A- 5 944 998

## Beschreibung

Die Erfindung bezieht sich auf Filtereinrichtungen, die zum Klären von verschmutzten Flüssigkeiten, insbesondere in der Abwasserreinigung und Wasseraufbereitung eingesetzt werden.

Derartige Filtereinrichtungen bestehen aus mehreren voneinander beabstandeten Filterelementen die zu Filtermodulen zusammengefaßt und in Kreis- oder Polygonbauform in einem die Filterflüssigkeit enthaltenen Behälter drehbar angeordnet sind. Die Filterelemente bestehen aus Filterscheiben, die beiderseits mit Filtern bestückt sind und Rillen zum Ableiten des Filtrats aufweisen. Zu Beginn der Drehbewegung der Filtermodule in der noch ruhenden Filterflüssigkeit entsteht an den Filterflächen ein Strömungswiderstand, der zunächst verhindert, daß sich infolge der hohen Relativgeschwindigkeit zwischen Filtereinrichtung und Flüssigkeit an den Filterflächen zurückgehaltene Feststoffe ansetzen. Mit zunehmender Drehdauer der Filtereinrichtung nimmt jedoch der anfängliche Strömungswiderstand ab, weil die Filterflüssigkeit mehr und mehr umgewälzt wird und die Relativgeschindigkeit zwischen Filtereinrichtung und Flüssigkeit geringer wird, so daß sich mit fortschreitender Filterzeit sogenannte Deckschichten aus Feststoffen an den Filtern ausbilden, die den Wirkungsgrad der Filtereinrichtung verschlechtern.

Aus DE 195 37 578 ist bekannt, zur Beseitigung der filtrationshemmenden Deckschicht an den Filtern eine Rückspüleinrichtung vorzusehen, die aus einer Mehrzahl von Absaugbalken besteht, die an den Filtern beidseits der Filterscheibe anliegen und sich radial von außen noch innen erstrecken. Die einzelnen Absaugbalken sind an Fallrohren angeschlossen, und über weitere Rohrleitungssysteme mit einer Saugpumpe verbunden. Durch Öffnen von eingebauten Schiebern in den Fallrohren wird geklärte Flüssigkeit aus dem Innenraum der Filterscheiben in die Absaugbalken gedrückt, um so die Filterflächen von den anhaftenden Feststoffschichten zu befreien. Bei unzureichender Reinigung kann die Rückspülung über die angeschlossene Saugpumpe noch verstärkt werden. Bei diesen Abreinigungsprozeß verursachen die Absaugbalken einem mechanischen Verschleiß an den Filtern und beeinträchtigen so ihre Lebensdauer. Zusätzlich zur Rückspüleinrichtung ist noch eine Einrichtung zur Intensivreinigung der Filter vorgesehen. Sie besteht aus einem Satz vertikal bis zur Hohlwelle erstreckter Spritzrohre, deren Sprühdüsen von einer Hochdruckpumpe mit bereits geklärter Flüssigkeit beschickt werden. Dabei ist vom Nachteil, daß die zum Abreinigen der Filter benutzte geklärte Flüssigkeit durch Anreicherung mit Feststoffen in den Behälter wieder zurückfließt und den Filterprozeß erneut unterworfen wird, was zur Verringerung die Filterleistung führt. Der mechanische und steuerungstechnische Aufwand der Rückspül- und Intensivreinigungseinrichtung ist nicht unbeträchtlich. Die diskontinuierliche Abreinigung hat zur Folge, daß sich während des Filterprozesses zwischen den Reinigungsphasen immer wieder neue Deckschichten aus zurückgehaltenen Feststoffen an den Filtern ausbilden, die den Wirkungsgrad des Filterprozesses negativ beeinflussen. Weiterhin ist aus EP-A - 0.289.674 eine Filtereinrichtung bekannt, die nach dem Zentrifugenprinzip arbeitet. Dazu ist in einem geschlossenen Behälter eine Hohlwelle vertikal drehbar angeordnet auf der beabstandet nebeneinander Filterelemente befestigt sind. Die Hohlwelle weist unterhalb des Behälters ein Einlaßventil für die Zuführung der Filterflüssigkeit und oberhalb des Behälters ein Einlaßventil für die Zuführung eines Rückspülmittels auf. Zunächst wird bei geschlossenem Einlaßventil für die Rückspülung Filterflüssigkeit über das untere Einlaßventil in die Hohlwelle eingeleitet. Durch die während der Rotation entstehende Zentrifugalkraft tritt die Filterflüssigkeit durch die Löcher der Hohlwelle hindurch und gelangt zwischen die benachbarten Filterelemente. Die Zentrifugalkraft bewirkt einen Außendruck auf die Filterscheiben, so daß das Filtrat in den Innenraum der Filterscheiben eindringt und mittels Rohrleitungen an der Peripherie der Scheiben abgeleitetet und in einer Wanne oberhalb des geschlossenen Behälters aufgefangen wird, von wo es abfließen kann. Während des Filtervorgangs bilden sich auch hier an den Filterflächen filtrationshemmende Deckschichten, die mit fortschreitender Filterzeit den Filterprozeß hemmen. Deshalb ist regelmäßig eine Rückspülung notwendig. Die Zuführung von Filterflüssigkeit wird für die Zeit der Rückspülung unterbrochen und über das Einlaßventil für die Rückspülung ein Rückspülmedium unter hohem Druck in die Hohlwelle eingeleitet, daß entweder aus klarem Filtrat, Luft oder Gas besteht und über die Löcher in der Hohlwelle zwischen die benachbarten Filterscheiben ausströmt und so die filtrationshemmenden Deckschichten von den Filterflächen beseitigt.

Der Erfindung liegt die Aufgabe zugrunde, unter Vermeidung der Nachteile des Standes der Technik eine Filtervorrichtung zur Klärung von verschmutzten Flüssigkeiten zu schaffen, mit der eine selbsttätige, kontinuierliche und verschleißfreie Reinigung der Filter erreicht und somit verhindert wird, daß sich während des Filtervorgangs an den Filtern filtrationshemmende Feststoffablagerungen (Deckschichten) bilden, die den Filterprozeß negativ beieinflussen.

Erfindungsgemäß wird die Aufgabe dadurch gelöst, daß die Filtermodule mittig einen Hohlraum bilden, der auf der einen Seite durch eine Tragscheibe verschlossen ist und auf der anderen Seite über eine Ansaugöffnung mit dem Behälter verbunden ist, und daß der Hohlraum mit einem Strömungsglied derart in Wirkverbindung gebracht ist, daß über die Ansaugöffnung in der ungeklärten Flüssigkeit eine Strömung zwischen den beabstandeten Filterelementen erzeugbar ist, die eine Anhaftung von Feststoffen an den Filterelemnenten vermeidet.
Dadurch wird ein ständiger Strömungswiderstand durch Verwirbelung der ungeklärten Flüssigkeit zwischen den benachbarten Fiterelementen erzeugt, und eine selbsttätige, stetige und verschleißfreie Reinigung der Filter ohne mechanische Einwirkung bewirkt. Filtrationshemmende Deckschichten durch Feststoffablagerungen an den Filtern werden somit vermieden, so daß der Wirkungsgrad bei der Filtration verbessert wird. Für den Reinigungsprozeß dient ausschließlich die ungeklärte Flüssigkeit im Behälter, so daß bereits geklärte Flüssigkeit nicht mehr in den Filterkreislauf zurückgeführt werden muß, wodurch sich gegenüber herkömmlichen Filtereinrichtungen die Filterleistung erhöht. Die Erfindung läßt sich ohne hohen technischen Aufwand bei niedrigen Kosten realisieren und ist außerdem wartungsfreundlich.

Zweckmaßigerweise sind die Filtermodule auf Stangen aufgereiht und über einer mit der Tragscheibe fest verbundenen Antriebswelle in einem Lager einerseits und über einen, die Ansaugöffnung aufweisenden Lagerflansch in einem Lager andererseits abgestützt ist. In vorteilhafter Weise ist das Strömungsglied als Pumpenschaufelrad ausgebildet und über die mit den Filtermodulen verbundene Tragscheibe mit einer Antriebswelle verbunden. Dadurch wird mit der Filtereinrichtung gleichzeitig eine Pumpenwirkung erzeugt, die während des Filtervorgangs ein intensives Hindurchströmen der Filterflüssigkeit zwischen den beabstandeten Filterelementen mit gleichzeitigem Reinigungseffekt bewirkt. Durch das integrierte Pumpenschaufelrad erübrigt sich ein gesonderter Antrieb und es veringem sich die Kosten.

Nach einem weiteren Merkmal der Erfindung ist in der Ansaugöffnung des Lagerflansches ein Axialschaufelrad angeordnet, das mit einem separaten Motor verbunden ist. Damit kann unabhängig von der Drehzahl der Filtereinrichtung die Drehzahl des Strömungsglieds geregelt und somit die Strömungsgeschwindigkeit der Filterflüssigkeit an den Filterflächen gesteuert werden.

Nach einem anderen Merkmal ist vorgesehen, daß durch die Ansaugöffnung des Lagerflansches ein Strömungskanal eingefügt und in einem Stützlager befestigt ist, wobei der Strömungskanal einerseits durch eine Ansaugöffnung mit dem Behälter und andererseits durch eine schlitzförmige Öffnung mit dem Hohlraum verbunden ist. Dadurch läßt sich eine noch höhere Strömungsgeschwindigkeit zwischen den Filterelementen erzielen und der Abreinigungseffekt weiter intensivieren. Nach einem letzten Merkmal ist vorgesehen, daß durch die Ansaugöffnung des Lagerflansches ein Strömungskanal eingefügt und in einem Stützlager befestigt ist, wobei der Strömungskanal durch eine Ansaugöffnung mit einer Rohrleitung verbunden ist, die mit einer Ansaugöffnung unterhalb der Filtereinrichtung am Behälter einmündet und in die Rohrleitung eine Flüssigkeitspumpe integriert ist.

Die Erfindung soll nachstehend an einem Ausführungsbeispiel näher erläutert werden. In der zugehörigen Zeichnung zeigen:
- Fig. 1:: eine schematische Darstellung der Filtereinrichtung mit Pumpenschaufelrad
- Fig. 2:: eine Ausführungsvariante mit einem separat angetriebenen Axialschaufelrad
- Fig. 3:: eine Ausführungsvariante mit eingebautem Strömungskanal und mögliche Anordnungen der Strömungsglieder
- Fig. 4:: eine Ausführungsvariante mit Strömungskanal und integrierter Pumpe

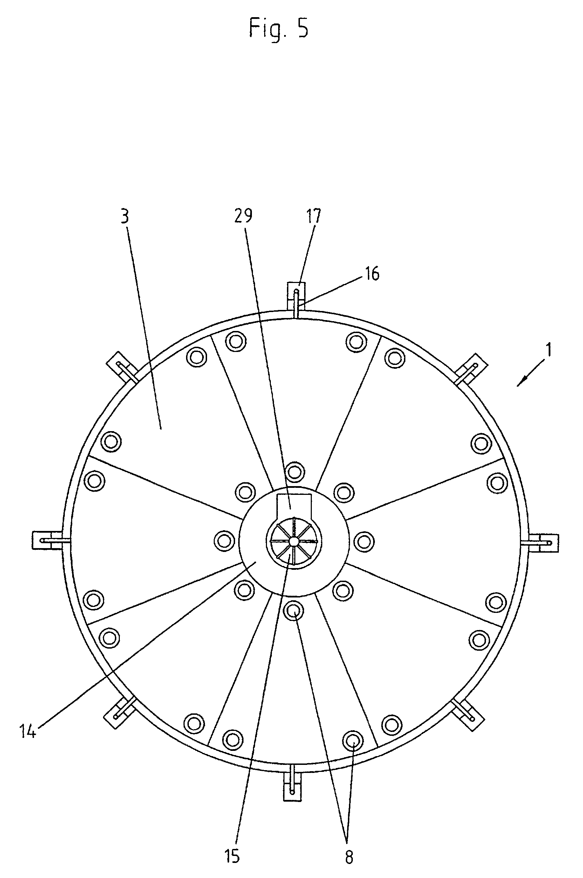

- Fig. 5:: einen Schnitt gemäß der Linie I - I nach Fig. 3

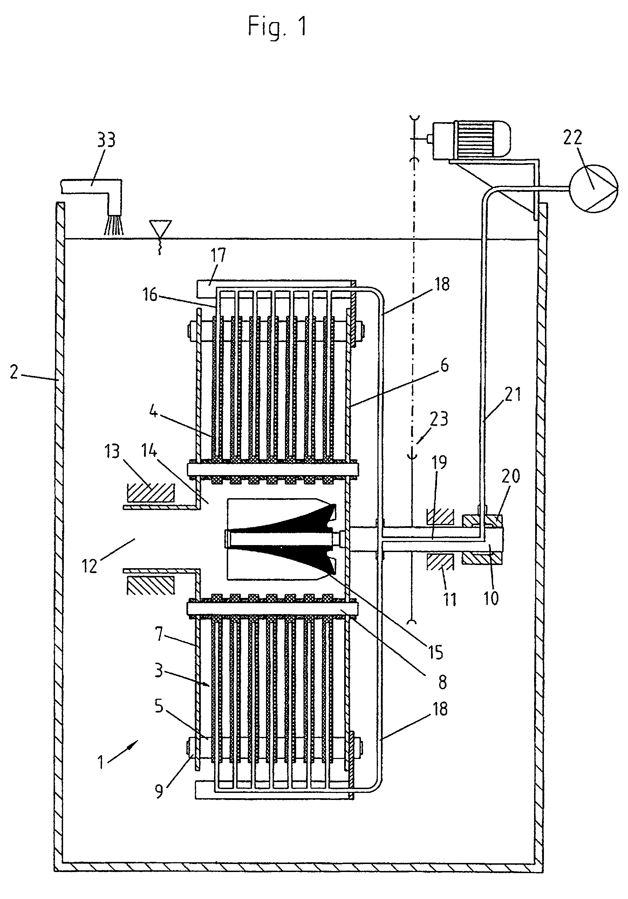

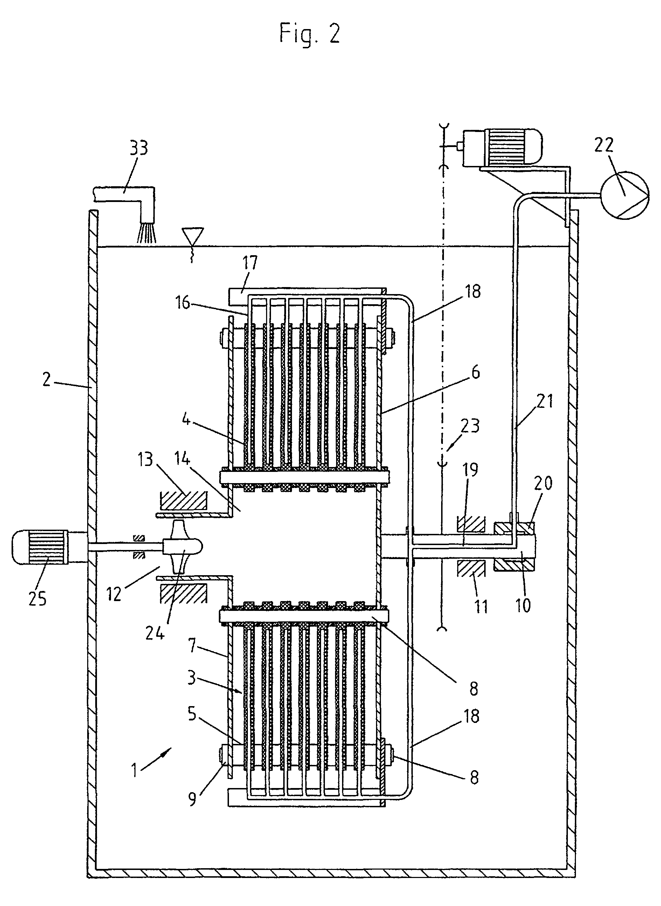

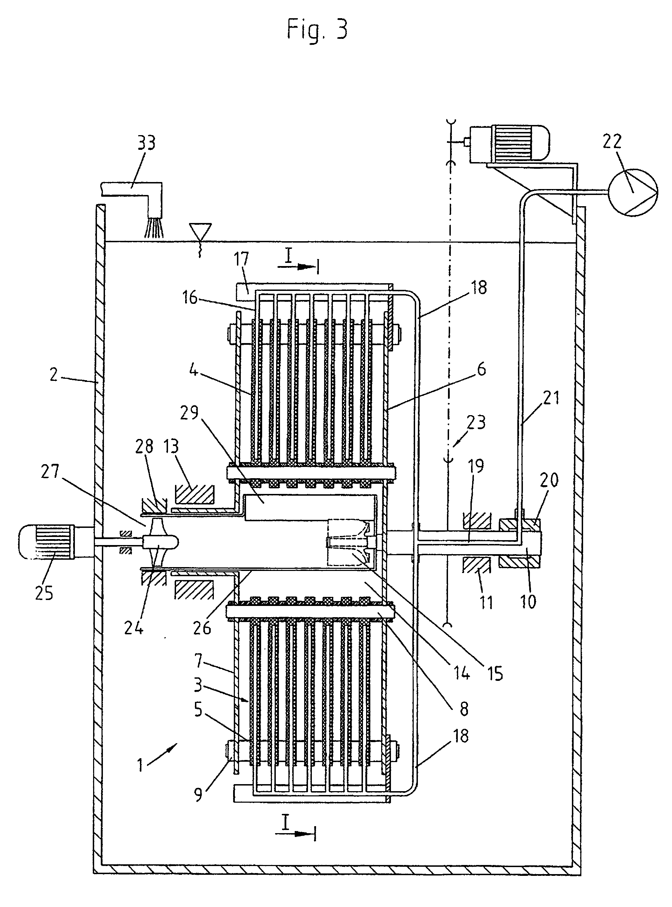

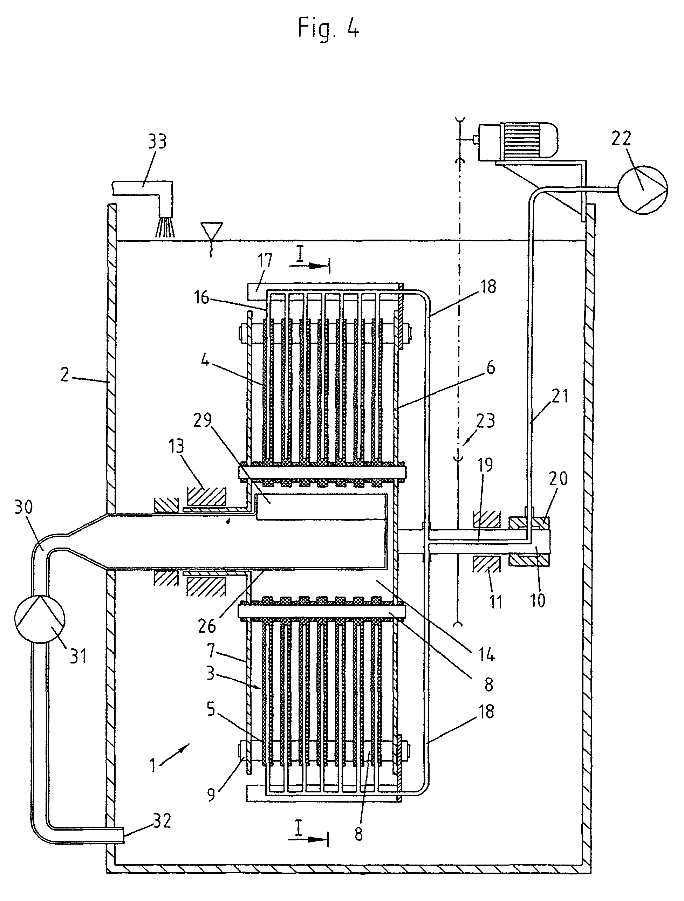

Die Filtereinrichtung 1 ist in einem die Filterflüssigkeit enthaltenen Behälter 2 drehbar untergebracht. Dabei sind mehrere Filtermodule 3 kreisförmig angeordnet. Die Filtermodule 3 sind aus einzelnen Filterelementen 4 in einen Abstand von vorzugsweise 4 bis 8 mm zusammengesetzt. Die Filterelemente 4 bestehen aus bekannten, in der Zeichnung nicht dargestellten Filterscheiben, über die das Filtrat abgeleitet wird und die beiderseits mit Filtern bestückt sind. Der Abstand zwischen den Filterelementen 4 wird mittels Distanzscheiben 5 hergestellt. Die Filtermodule 3 sind einerseits von einer Tragscheibe 6 und andererseits von einem Lagerflansch 7 begrenzt und mittels Stangen 8 und Muttern 9 befestigt. Die Tragscheibe 6 ist mit einer Antriebswelle 10 fest verbunden und in einem Lager 11 drehbar abgestützt. Der Lagerflansch 7 weist eine Ansaugöffnung 12 auf, und ist in einem Lager 13 geführt. Über die Ansaugöffnung 12 ist ein durch die Filtermodule 3 gebildeter Hohlraum 14 mit dem die Filterflüssigkeit enthaltenen Behälter 2 verbunden. Im Hohlraum 14 ist ein als Pumpenschaufelrad 15 ausgebildetes Strömungsglied angeordnet, daß über die Tragscheibe 6 mit der Antriebswelle 10 verbunden ist. Die einzelnen Filterelemente 4 sind an Absaugleitungen 16 angeschlossen, die mit an der Tragscheibe 6 befestigten Kanalleisten 17 verbunden sind und an die stimseitig Rohrleitungen 18 einmünden, die an der Stirnseite der Tragscheibe 6 sternförmig entsprechend der Anzahl der Filtermodule 3 verlaufen und auf der Antriebswelle 10 befestigt sind. Die Rohrleitungen 18 sind über Verbindungskanäle 19 und einem auf der Antriebswelle 10 angeordneten Gleitring 20 verbunden, an dem eine weitere Rohrleitung 21 angeschlossen ist, die zu einer Vakuumpe 22 führt. Über die Antriebswelle 10 ist die Filtereinrichtung 1 mit einen Kettentrieb 23 verbunden (Fig. 1). Bei einer weiteren Ausführungsmöglichkeit gemäß Fig. 2 ist vorgesehen, daß in der Ansaugöffnung 12 des Lagerflansches 7 ein Axialschaufelrad 24 angeordnet ist, das über einen Motor 25 separat angetrieben wird. Nach einer Ausführungsform gemäß Fig 3 ist in der Ansaugöffnung 12 ein Strömungskanal 26 mit einer Ansaugöffnung 27 eingeschoben, die an einem Stützlager 28 befestigt ist. Der Hohlraum 14 ist dabei über eine schlitzförmige Öffnung 29 mit der Ansaugöffnung 27 verbunden. Über den Strömungskanal 26 kann sowohl ein Pumpenschaufelrad 15 als auch ein motorgetriebenes Axialschaufelrad 24 betrieben werden. Fig. 4 zeigt eine weitere Ausführungsform, indem der Strömungskanal 26 über eine Rohrleitung 30 mit einer Pumpe 31 verbunden ist und durch eine Ansaugöffnung 32 im unteren Bereich des Behälters 2 einmündet.

Die Wirkungsweise ist nun folgende:
Während der Drehbewegung der Filtereinrichtung 1 wird über die Vakuumpumpe 22 Filtrat aus dem Behälter 2 angesaugt, das über die Filter der Filterelemente 4 eindringt und über Absaugleitungen 16, Kanalleisten 17, Rohrleitungen 18, Verbindungskanäle 19, Gleitring 20 und Rohrleitung 21 abgeleitet wird. Über einen Zulauf 33 wird die Filterflüssigkeit im Behälter 2 konstant gehalten. Durch die vorgesehenen Strömungsglieder wird über die Ansaugöffnungen 12, 27, 32 in der Filterflüssigkeit eine definierte Strömung zwischen den beabstandeten Filterelementen erzeugt, so daß die durch den Filtersog angezogenen Feststoffe an den Filtern nicht haften bleiben und durch die Flüssigkeitsströmung ständig mitgerissen werden. Dadurch wird während des gesamten Filtervorgangs ein selbsttätiger, stetiger Reinigungseffekt ohne Verschleißeinwirkung an den Filtern erreicht. Neben den verhältnismäßig geringen Investitionsaufwand gegenüber herkömmlichen gattungsmäßigen Filtereinrichtungen wird hierbei auch der Energieaufwand deutlich gesenkt und der Wirkungsgrad der Filtereinrichtung erhöht. Durch die Vermeidung einer Rückspülung und Intensivreinigung mittels geklärten Wasser wird die Filterleistung erhöht.

## Patentansprüche

1. Filtereinrichtung (1) zum Klären von verschmutzten Flüssigkeiten, insbesondere von Abwasser, bestehend aus mehreren voneinander beabstandeten, scheibenförmigen Filterelementen (4), die zu kreis- oder polygonförmigen Filtermodulen (3) zusammengefaßt sind und in einem, die ungeklärte Flüssigkeit enthaltenen Behälter (2) um eine horizontale Achse drehbar angeordnet sind, wobei über die einzelnen Filtermodule (3) das Filtrat ableitbar ist, **dadurch gekennzeichnet, daß** die Filtermodule (3) mittig einen Hohlraum (14) bilden, der auf der einen Seite durch eine Tragscheibe (6) verschlossen ist und auf der anderen Seite über eine Ansaugöffnung (12) mit dem Behälter (2) verbunden ist, und daß der Hohlraum (14) mit einem Strömungsglied derart in Wirkverbindung gebracht ist, daß über die Ansaugöffnung (12) in der ungeklärten Flüssigkeit eine Strömung zwischen den beabstandeten Filterelementen (4) erzeugbar ist, die eine Anhaftung von Feststoffen an den Filterelementen vermeidet.

2. Filtereinrichtung nach Anspruch 1, **dadurch gekennzeichnet, daß** die Filtermodule (3) auf Stangen (8) aufgereiht und über einer mit der Tragscheibe (6) fest verbundenen Antriebswelle (10) in einem Lager (11) einerseits und einen, die Ansaugöffnung (12) aufweisenden Lagerflansch (7) in einem Lager (13) anderseits abgestützt sind.

3. Filtereinrichtung nach Anspruch 1 und 2, **dadurch gekennzeichnet, daß** das Strömungsglied als Pumpenschaufelrad (15) ausgebildet und über die mit den Filtermodulen (3) verbundene Trägerplatte (6) mit der Antriebswelle (10) verbunden ist.

4. Filtereinrichtung nach Anspruch 2 und 3, **dadurch gekennzeichnet, daß** in der Ansaugöffnung 12 des Lagerflansches 7 ein Axialschaufelrad (24) angeordnet ist, das mit einem separaten Motor (25) verbunden ist.

5. Filtereinrichtung nach Anspruch 2 bis 4, **dadurch gekennzeichnet, daß** durch die Ansaugöffnung (12) des Lagerflansches 7 ein Strömungskanal (26) eingefügt und in einem Stützlager (28) befestigt ist, wobei der Strömungskanal (26) einerseits durch eine Ansaugöffnung (27) mit dem Behälter (2) und andererseits durch eine schlitzförmige Öffnung (29) mit dem Hohlraum (14) verbunden ist.

6. Filtereinrichtung nach Anspruch 2, **dadurch gekennzeichnet, daß** durch die Ansaugöffnung (12) des Lagerflansches (7) ein Strömungskanal (26) eingefügt und in einem Stützlager (28) befestigt ist, wobei der Strömungskanal (26) durch eine Ansaugöffnung (27) mit einer Rohrleitung (30) verbunden ist, die mit einer Ansaugöffnung (32) unterhalb der Filtereinrichtung (1) am Behälter (2) einmündet und in die Rohrleitung (30) eine Flüssigkeitspumpe (31) integriert ist.

## Claims

1. Filter device (1) for the clarification of contaminated liquids, in particular of sewage, consisting of a plurality of disc-shaped filter elements (4) which are spaced apart from one another and which are combined into circular or polygonal filter modules (3) and are arranged rotatably about a horizontal axis in a vessel (2) containing the unclarified liquid, the filtrate being capable of being discharged via the individual filter modules (3), **characterized in that** the filter modules (3) form centrally a cavity (14) which on one side is closed by means of a carrying disc (6) and on the other side is connected to the vessel (2) via a suction-intake orifice (12), and **in that** the cavity (14) is connected operatively to a flow member in such a way that, via the suction-intake orifice (12), a flow can be generated in the unclarified liquid between the spaced-apart filter elements (4) and avoids an adhesion of solids to the filter elements.

2. Filter device according to Claim 1, **characterized in that** the filter modules (3) are lined up on rods (8) and are supported, on the one hand, in a bearing (11) via a driveshaft (10) connected firmly to the carrying disc (6) and, on the other hand, in a bearing (13) via a bearing flange (7) having the suction-intake orifice (12).

3. Filter device according to Claims 1 and 2, **characterized in that** the flow member is designed as a pump vane wheel (15) and is connected to the driveshaft (10) via the carrier plate (6) connected to the filter modules (3).

4. Filter device according to Claims 2 and 3, **characterized in that** an axial vane wheel (24) connected to a separate motor (25) is arranged in the suction-intake orifice (12) of the bearing flange (7).

5. Filter device according to Claims 2 to 4, **characterized in that** a flow duct (26) is inserted through the suction-intake orifice (12) of the bearing flange (7) and is fastened in a support bearing (28), the flow duct (26) being connected, on the one hand, to the vessel (2) by means of a suction-intake orifice (27) and, on the other hand, to the cavity (14) by means of a slot-shaped orifice (29).

6. Filter device according to Claim 2, **characterized in that** a flow duct (26) is inserted through the suction-intake orifice (12) of the bearing flange (7) and is fastened in a support bearing (28), the flow duct (26) being connected by means of a suction-intake orifice (27) to a pipeline (30) which issues with a suction-intake orifice (32) below the filter device (1) on the vessel (2), and a liquid pump (31) being integrated into the pipeline (30).

## Revendications

1. Dispositif de filtration (1) pour la clarification de liquides contaminés, en particulier d'eaux usées, se composant de plusieurs éléments de filtre (4) en forme de disque, espacés les uns des autres, qui sont assemblés pour former des modules de filtre (3) de forme circulaire ou polygonale et qui sont disposés à rotation autour d'un axe horizontal dans un récipient (2) contenant le liquide non clarifié, le filtrat pouvant être évacué par le biais des modules de filtre individuels (3), **caractérisé en ce que** les modules de filtre (3) forment au centre un espace creux (14) qui est fermé d'un côté par un disque de support (6) et qui est connecté de l'autre côté par le biais d'une ouverture d'aspiration (12) au récipient (2), et **en ce que** l'espace creux (14) est amené en liaison coopérante avec un organe d'écoulement de telle sorte qu'un écoulement puisse se produire à travers l'ouverture d'aspiration (12) dans le liquide non clarifié, entre les éléments de filtre espacés (4), lequel écoulement empêche les matières solides d'adhérer aux éléments de filtre.

2. Dispositif de filtration selon la revendication 1, **caractérisé en ce que** les modules de filtre (3) sont alignés sur des barres (8) et sont supportés d'une part par le biais d'un arbre d'entraînement (10) connecté fixement au disque de support (6) dans un palier (11), et d'autre part par une bride de palier (7) présentant l'ouverture d'aspiration (12) dans un palier (13).

3. Dispositif de filtration selon les revendications 1 et 2, **caractérisé en ce que** l'organe d'écoulement est réalisé en tant que roue à aube de pompe (15) et est connecté à l'arbre d'entraînement (10) par le biais de la plaque de support (6) connectée aux modules de filtre (3).

4. Dispositif de filtration selon les revendications 2 et 3, **caractérisé en ce qu'**une roue à aubes axiale (24) est disposée dans l'ouverture d'aspiration 12 de la bride de palier 7, laquelle est connectée à un moteur séparé (25).

5. Dispositif de filtration selon les revendications 2 à 4, **caractérisé en ce qu'**un canal d'écoulement (26) est introduit à travers l'ouverture d'aspiration (12) de la bride de palier 7 et est fixé dans un palier de support (28), le canal d'écoulement (26) étant connecté d'une part par une ouverture d'aspiration (27) au récipient (2) et d'autre part par une ouverture en forme de fente (29) à l'espace creux (14).

6. Dispositif de filtration selon la revendication 2, **caractérisé en ce qu'**un canal d'écoulement (26) est introduit à travers l'ouverture d'aspiration (12) de la bride de palier 7 et est fixé dans un palier de support (28), le canal d'écoulement (26) étant connecté par une ouverture d'aspiration (27) à une conduite tubulaire (30) qui débouche avec une ouverture d'aspiration (32) sous le dispositif de filtration (1) au niveau du récipient (2) et une pompe à liquide (31) étant intégrée dans la conduite tubulaire (30).
